# FASCICULE DE BREVET EUROPEEN

(11) **EP 1 240 622 B1**
(45) Date de publication et mention de la délivrance du brevet: **03.03.2004**
(21) Numéro de dépôt: 00990071.3
(22) Date de dépôt: 20.12.2000
(51) Int. Cl.: G06T 7/00, G08B 21/00, G01V 8/10

(54) **PROCEDE ET SYSTEME POUR DETECTER UN OBJET PAR RAPPORT A UNE SURFACE**
VERFAHREN UND VORRICHTUNG ZUR DETEKTION EINES GEGENSTANDES IN BEZUG AUF EINE OBERFLÄCHE
METHOD AND SYSTEM FOR DETECTING AN OBJECT IN RELATION TO A SURFACE

(30) Priorité: 21.12.1999 FR 9916124
(43) Date de publication de la demande: 18.09.2002
(73) Titulaire: Poseidon, 92100 Boulogne Billancourt (FR)
(72) Inventeur: MENIERE, Jérôme, F-75017 Paris (FR); MIGLIORINI, Christophe, F-92800 Puteaux (FR)
(74) Mandataire: Grynwald, Albert
(86) Numéro de dépôt international: PCT/FR2000/003602
(87) Numéro de publication internationale: WO 2001/046908

(56) Documents cités:
- EP-A- 0 360 880
- DE-A- 19 517 028
- FR-A- 2 741 370
- PATENT ABSTRACTS OF JAPAN vol. 1999, no. 09, 30 juillet 1999 (1999-07-30) & JP 11 102440 A (TOSHIBA CORP), 13 avril 1999 (1999-04-13)

## Description

La présente invention concerne un procédé et un système pour détecter un objet par rapport à une surface, ladite surface n'étant pas nécessairement plane. Au sens de la présente invention on entend par objet : un élément matériel dénué de vie et/ou une personne ou un animal. L'objet au sens de l'invention peut être statique et/ou en mouvement. La surface au sens de l'invention peut-être une surface virtuelle ou une surface réelle transparente ou non.

Dans bon nombre d'applications industrielles, il est nécessaire de détecter la présence et de déterminer la position d'un objet par rapport à une surface, notamment afin de pouvoir évaluer si l'objet est en mouvement par rapport à cette surface. L'étude de ce mouvement relatif apporte des renseignements sur l'objet et/ou la surface.

Afin de présenter dans le cadre d'une application industrielle concrète, le problème posé et résolu par la présente invention, on développera ci-après le cas particulier des systèmes de télésurveillance conçus pour détecter un intrus se déplaçant dans un environnement déterminé. Ces systèmes de télésurveillance permettent de discriminer entre les personnes ayant un comportement anormal par rapport à celles ayant un comportement normal.

Plus particulièrement, le procédé et le système selon l'invention s'appliquent à la surveillance d'une piscine pour la prévention des noyades.

Le brevet SP2 FR 96 10442 déposé le 26 août 1996 au nom de Poséidon décrit un tel système de surveillance d'une piscine en se référant à l'art antérieur. On en incorporera ici de larges extraits. La surveillance des piscines est ou bien inexistante, ou bien réalisée par surveillance humaine. Une telle surveillance est une tâche difficile demandant une attention soutenue et entraînant une fatigue nerveuse des personnes, notamment des maîtres-nageurs, auxquelles elle incombe. En effet, en plus des limitations inhérentes à tout système reposant sur une intervention humaine, par exemple baisse de vigilance due à une fatigue ou à une distraction momentanée, la surveillance des piscines est rendue très délicate en raison de la réflexion de la lumière à la surface de l'eau agitée, phénomène qui rend difficile le repérage visuel d'un corps immobile ou en coulée passive, à quelques mètres de profondeur. Le problème de surveillance des piscines se pose surtout pour les piscines ouvertes au public.

Généralement, le baigneur accidenté coule vers le fond mais, de façon plus rare, il arrive qu'il flotte sans connaissance dans une position caractéristique juste sous la surface de l'eau.

A compter de la perte de connaissance, qui marque un début de noyade, un sauveteur expérimenté, sachant notamment pratiquer la respiration artificielle, dispose d'environ deux à trois minutes pour porter secours au noyé. Si ce délai est respecté, le noyé ne conservera généralement pas de séquelles de l'accident, après un séjour éventuel en hôpital pour nettoyer ses poumons. De façon générale, si les secours ont lieu entre trois et cinq minutes après la perte de connaissance, ce temps étant néanmoins variable selon les individus, le noyé peut encore être sauvé, mais il risque certaines lésions irréversibles, notamment au cerveau. Au-delà de cinq minutes, le risque de décès devient très important.

On a déjà proposé, dans le brevet US 5 043 705, d'utiliser un sonar pour réaliser une surveillance de piscine. Selon ce dispositif, on dispose au moins d'un émetteur-récepteur sonar sur le fond de la piscine et on surveille une tranche horizontale au moyen de cet appareil. L'utilisation d'un tel dispositif présente des inconvénients. En effet, le signal obtenu avec un sonar incorpore les échos fournis par les murs de piscine et il est extrêmement difficile d'éliminer le signal bruit ainsi obtenu pour pouvoir détecter le signal correspondant au corps immergé d'un noyé. Au surplus, le sonar permet essentiellement de repérer le corps d'un noyé par le volume d'air qu'il contient; si un accidenté a les poumons remplis d'eau, le signal obtenu ne sera pas du tout conforme à celui que l'on est en droit d'attendre et pourra même ne pas être repéré par le traitement du signal. On constate donc qu'un tel système n'est pas susceptible de donner satisfaction.

On a également proposé, dans la demande de brevet WO 95/34056, d'utiliser pour une surveillance de piscine des caméras travaillant dans le domaine des ondes visibles. Ces caméras sont disposées de telle façon que la zone observée est située dans un volume proche et parallèle au fond de la piscine. Dans ce dispositif, les caméras n'observent qu'une tranche d'eau parallèle au fond, ce qui implique de multiplier les caméras si le fond n'est pas plan et laisse sans surveillance la majeure partie du volume de la piscine. En outre, ce dispositif ne permet pas de détecter les corps immobiles juste au-dessous de la surface de l'eau. Ce dispositif ne peut donc donner satisfaction.

Dans la demande de brevet SP2 (FR 96 10442 Poséidon) il est décrit un système de surveillance d'une piscine comprenant :
- des moyens de détection (notamment des caméras vidéo disposées dans des compartiments étanches) propres à donner, sous forme de signaux électriques, des images des corps immergés dans l'eau de la piscine, ces moyens de détection étant prévus sur les parois de la piscine en des endroits judicieusement répartis pour balayer au moins une fraction du volume d'eau de la piscine ;
- des moyens de numérisation des signaux électriques obtenus ;
- des moyens de stockage temporaire et permanent des données numériques d'images à des instants successifs ;
- des moyens de comparaison entre les images numérisées d'un même corps à des instants successifs ;
- des moyens d'estimation de la nature d'un corps (corps humain ou non), de la trajectoire et des changements d'attitude du corps d'après ces images successives ;
- et des moyens de décision propres à déclencher des moyens d'alarme en cas de trajectoire ou mouvement suspect du corps observé.

Les moyens de comparaison des images numérisées entre instants successifs sont propres à ne prendre en considération que des formes, dont les dimensions correspondent au moins à celles d'un enfant, afin d'éliminer des alarmes intempestives pouvant être causées par des corps étrangers. Ces moyens de comparaison sont, en outre, agencés pour isoler une forme et suivre sa trajectoire à des instants successifs.

Les moyens d'estimation sont propres à déterminer, à partir des résultats des moyens de comparaison, le caractère lent d'un mouvement et/ou l'immobilité d'un corps humain dans la piscine.

Les moyens de décision sont propres à déclencher une alarme si le caractère lent du mouvement ou la quasi-immobilité du corps dans la piscine se prolonge au-delà d'un temps déterminé, en particulier au-delà de 15 secondes.

Un ou plusieurs écrans de contrôle sont disposés près des sièges des maîtres-nageurs ou dans les locaux des responsables assurant la surveillance de la piscine, écrans sur lesquels sont affichées les images d'une zone considérée comme suspecte. L'alarme peut être donnée par un avertisseur sonore et/ou visuel, en particulier avec indication de la zone de la piscine dans laquelle un événement suspect se produit.

Aussi perfectionnés qu'ils soient, de tels systèmes ne permettent pas toujours de distinguer un objet devant un fond. En effet, dans le cas où on utilise une seule caméra, il n'est pas toujours possible de distinguer une ombre portée, se déplaçant sur le fond, du corps d'un baigneur en coulée passive. Certes, dans le cas où on utilise plusieurs caméras observant le même objet de plusieurs points de vue, l'effet parallaxe devrait en principe permettre de distinguer un objet volumique situé devant le fond d'une tache bidimensionnelle située sur le fond. Toutefois pour que l'effet de parallaxe soit suffisamment sensible plusieurs conditions doivent être réunies. D'une part, il est souhaitable que les points de vue soient proches de l'objet observé. Cette première condition implique que l'on utilise plusieurs caméras pour surveiller une zone de grande dimension par rapport aux dimensions des objets que l'on cherche à détecter. Corrélativement, un tel système est alors particulièrement coûteux. D'autre part, il est souhaitable que le rendu des couleurs perçues par chaque caméra soit identique. Or, pour qu'il en soit ainsi il est nécessaire que les caractéristiques optoélectroniques des caméras vidéo soient les mêmes, ce qui n'est pas toujours le cas. De plus, le chemin optique entre l'objet et chaque caméra peut traverser des milieux ayant des indices de réfraction ou de transparence différents. C'est notamment le cas lorsque le corps observé est immergé dans une piscine dont la surface est agitée. Le rendu des couleurs de l'objet observé par chaque caméra n'est pas le même. Il en résulte que les corrélations géométriques permettant d'établir que les images (leurs contours et leurs nuances de gris) produites par chaque caméra proviennent d'un même objet volumique situé devant un fond coloré, ne peuvent plus être vérifiées avec certitude. Une confusion est alors possible entre une tache de couleur (une ombre portée par exemple) sur le fond de la piscine et un objet volumique à proximité du fond. Par conséquent, il en résulte des erreurs de détection et des déclenchements intempestifs des systèmes d'alarme.

La présente invention a pour objet d'éviter les inconvénients des procédés et des systèmes connus à ce jour, aussi performants soient-ils par ailleurs.

Le procédé et le système selon l'invention ont été conçus à l'origine pour la surveillance des piscines et la prévention des noyades. Toutefois, il est rapidement apparu que les techniques de traitement d'images consistant à analyser de manière globale l'image d'un objet volumique par rapport à une surface, pouvaient s'appliquer à des surfaces y compris des surfaces virtuelles et à des objets placés devant ou derrière de telles surfaces. Elles sont de ce fait susceptibles d'application dans d'autres domaines que celui de la surveillance des piscines.

### Procédé

La présente invention concerne un procédé pour détecter un objet par rapport à une surface, notamment une surface virtuelle, ladite surface n'étant pas nécessairement plane.

Le procédé selon l'invention comprend l'étape de réaliser par une transformation géométrique comprenant au moins une projection en perspective dudit objet sur ladite surface à partir d'au moins deux points de vue distincts, et pour chacun d'entre eux, une image de synthèse associée au point de vue considéré.

Dans la suite de la description on entend par image de synthèse associée au point de vue considéré l'image obtenue par application de la transformation géométrique à la scène observée à partir dudit point de vue qu'il y ait ou non un objet.

Ledit procédé comprend en outre l'étape de discriminer entre les images de synthèse pour détecter la présence et déterminer la position dudit objet par rapport à ladite surface.

Pour discriminer entre les différentes images de synthèse ledit procédé comprend en outre les étapes suivantes :
- l'étape de décomposer ladite surface en une mosaïque de pavés (Zi) comportant chacun un centre (Ci),
- l'étape d'associer à chaque centre (Ci) et à chaque point de vue, une direction spécifique (Di).

Ainsi, chaque image de synthèse est décomposée en pavés virtuels (zi) comportant chacun autant de directions spécifiques virtuelles (di) qu'il y a de points de vue.

Le procédé selon l'invention comprend en outre pour discriminer entre les images de synthèse les étapes suivantes :
- l'étape de sélectionner au moins un couple d'images de synthèse associé à au moins un couple de points de vue,
- l'étape de choisir sur chaque image de synthèse du couple sélectionné des zones situées selon chacune des directions spécifiques virtuelles (di) de chaque pavé virtuel (zi),
- l'étape de comparer lesdites zones en recherchant des différences antagonistes d'une image de synthèse à l'autre.

S'il apparaît des différences antagonistes lors de la recherche on conclut qu'il y a un objet.

De préférence, pour déterminer si un objet est devant et/ou derrière ladite surface, on choisit sur chacune des directions spécifiques virtuelles (di) les zones de comparaison d'un côté et/ou de l'autre desdits centres (ci) desdits pavés virtuels (zi) par rapport à chacun des points de vue.

De préférence, pour déterminer si ledit objet s'étend plus ou moins loin par rapport à ladite surface, on choisit sur chacune des directions spécifiques virtuelles (di) des zones de comparaison plus ou moins éloignées desdits centres (ci) des pavés virtuels (zi).

De préférence, le procédé selon l'invention comprend en outre l'étape de déduire la position dudit objet le long de la surface en fonction de la position sur la surface des pavés (zi) pour lesquels des différences antagonistes ont été trouvées.

De préférence, pour réaliser chacune desdites images de synthèse associées à un point de vue considéré,
- on capte, en chaque point de vue, des émissions radioactives et/ou des rayonnements électromagnétiques (notamment lumineux) et/ou des vibrations mécaniques provenant dudit objet, de manière à produire un signal,
- on numérise ledit signal pour obtenir des données numérisées,
- on calcule, à partir des données ainsi obtenues, lesdites images de synthèse.

De préférence pour capter les rayonnements électromagnétiques, notamment lumineux, et/ou les vibrations mécaniques, notamment les ultrasons, on met en oeuvre une caméra optique et/ou un sonar en chaque point de vue.

De préférence, lorsque lesdites images de synthèse présentent des zones de différentes couleurs, pour rechercher des différences antagonistes sur chaque image de synthèse du couple sélectionné, on recherche des inversions de contrastes de couleur entre des zones situées selon chacune des directions spécifiques virtuelles (di) de chaque pavé (zi).

Selon une variante de réalisation, l'invention concerne également un procédé plus particulièrement destiné à détecter un objet devant un fond, dans ce cas ledit fond compose ladite surface.

Dans le cas de cette variante de réalisation, ladite transformation géométrique comprend en outre une projection, sur une surface de référence (notamment une surface plane) associée au point de vue considéré, de l'image virtuelle résultant de la projection en perspective dudit objet sur ledit fond à partir dudit point de vue considéré. Avantageusement, la projection sur la surface de référence est une projection orthogonale. Également, dans le cas de cette variante de réalisation, ladite image de synthèse associée au point de vue considéré est composée :
- de l'image réalisée par application de ladite transformation géométrique audit objet,
et en outre de la superposition, sur ladite surface de référence,
- de l'image réalisée par application de ladite transformation géométrique à une représentation virtuelle composée des parties du fond non masquées par ladite projection en perspective de l'objet.

De préférence, dans le cas de cette variante de réalisation, pour réaliser ladite image de synthèse sur une surface de référence on calcule, à partir desdites données numérisées, les données relatives à l'image de synthèse, sur ladite surface de référence.

L'invention à également pour objet une application mettant en oeuvre les traits techniques précédemment décrits et destinée à la surveillance des corps dans une piscine. Dans le cas de cette application, ledit fond est composé du fond et/ou des parois de la piscine. Dans le cas où, après discrimination des images de synthèse on conclut qu'il y a un corps dans la piscine :
- on itère la procédure de discrimination pour distinguer un corps ayant une trajectoire suspecte, notamment un corps immobile ou un corps en coulée passive, d'un corps ayant une trajectoire normale,
- on émet un signal d'alerte lorsque le corps a une trajectoire suspecte pendant une période de temps anormalement longue.

De préférence cette application concerne le cas d'un corps situé à proximité du fond.

De préférence dans le cas de cette application :
- au moins deux points de vue sont situés sur les parois de la piscine en des endroits appropriés pour balayer au moins une fraction du volume d'eau de la piscine,
- ladite surface de référence est sensiblement parallèle à la surface de l'eau de la piscine.

### Système

L'invention concerne également un système pour détecter un objet par rapport à une surface, notamment une surface virtuelle, ladite surface n'étant pas nécessairement plane.

Le système selon l'invention comprend des moyens de détection et des premiers moyens de calcul d'une unité centrale de traitement pour réaliser, par une transformation géométrique comprenant au moins une projection en perspective dudit objet sur ladite surface à partir d'au moins deux points de vue distincts, et pour chacun d'entre eux, une image de synthèse associée au point de vue considéré.

Ledit système comprend en outre des moyens de discrimination pour discriminer entre les images de synthèse. Lesdits moyens de discrimination permettant de détecter la présence et de déterminer la position dudit objet par rapport à ladite surface. De préférence, lesdits moyens de discrimination comprennent des moyens de partition pour décomposer ladite surface en une mosaïque de pavés (Zi) comportant chacun un centre (Ci) et autant de directions spécifiques (Di) qu'il y a de points de vue. Ainsi, chaque image de synthèse est décomposée en pavés virtuels (zi) comportant chacun autant de directions spécifiques virtuelles (di), qu'il y a de points de vue.

Lesdits moyens de discrimination comprennent en outre pour discriminer entre les images de synthèse :
- des moyens de sélection pour sélectionner au moins un couple d'images de synthèse associé à au moins un couple de points de vue,
- des moyens pour choisir sur chaque image de synthèse du couple sélectionné des zones situées selon chacune des directions spécifiques virtuelles (di) de chaque pavé virtuel (zi),
- des moyens de comparaison pour comparer lesdites zones en recherchant des différences antagonistes d'une image de synthèse à l'autre.

S'il apparaît des différences antagonistes lors de la recherche on conclut qu'il y a un objet.

De préférence, pour déterminer si un objet est devant et/ou derrière ladite surface, lesdits moyens pour choisir des zones sur chacune des directions spécifiques virtuelles (di) choisissent des zones de comparaison d'un côté et/ou de l'autre desdits centres (ci) desdits pavés virtuels (zi) par rapport à chacun des points de vue.

De préférence, pour déterminer si ledit objet s'étend plus ou moins loin par rapport à ladite surface, lesdits moyens pour choisir des zones sur chacune des directions spécifiques virtuelles (di) choisissent des zones de comparaison plus ou moins éloignées desdits centres (ci) des pavés virtuels (zi).

De préférence, les moyens de discrimination pour discriminer entre les images de synthèse déterminent la position dudit objet le long de la surface en fonction de la position sur la surface des pavés (zi) pour lesquels des différences antagonistes ont été trouvées.

De préférence, pour réaliser chacune desdites images de synthèse associées à un point de vue considéré, ledit système comprend des capteurs, en chaque point de vue. Lesdits capteurs comportent des moyens pour capter des émissions radioactives et/ou des rayonnements électromagnétiques (notamment lumineux) et/ou des vibrations mécaniques provenant dudit objet, de manière à produire un signal. Ledit système comprend en outre :
- des moyens de numérisation pour numériser ledit signal et pour obtenir des données numérisées,
- des moyens de calcul pour calculer, à partir des données ainsi obtenues, lesdites images de synthèse.

De préférence, lesdits capteurs pour capter des rayonnements électromagnétiques, notamment lumineux, et/ou des vibrations mécaniques, notamment des ultrasons, sont des caméras optiques et/ou des sonars situés en chaque point de vue.

De préférence lorsque lesdites images de synthèse présentent des zones de différentes couleurs, pour rechercher des différences antagonistes sur chaque image de synthèse du couple sélectionné, lesdits moyens de discrimination comprennent des moyens pour rechercher des inversions de contrastes de couleur entre des zones situées selon chacune des directions spécifiques virtuelles (di) de chaque pavé (zi).

Selon une variante de réalisation l'invention concerne également un système plus particulièrement destiné à détecter un objet devant un fond, dans ce cas ledit fond est composé de ladite surface.

Dans le cas de cette variante de réalisation, ladite transformation géométrique comprend en outre une projection, sur une surface de référence (notamment une surface plane) associée à un point de vue considéré, de l'image virtuelle résultant de la projection en perspective dudit objet sur ledit fond à partir dudit point de vue considéré. Avantageusement, la projection sur la surface de référence est une projection orthogonale. Également, dans le cas de cette variante de réalisation, ladite image de synthèse associée au point de vue considéré est composée :
- de l'image réalisée par application de ladite transformation géométrique audit objet,
et en outre de la superposition sur ladite surface de référence :
- de l'image réalisée par application de ladite transformation géométrique à une représentation virtuelle composée des parties du fond non masquées par ladite projection en perspective de l'objet.

De préférence, dans le cas de cette variante de réalisation, pour réaliser ladite image de synthèse sur une surface de référence, lesdits moyens de calcul calculent, à partir desdites données numérisées, les données relatives à l'image de synthèse sur ladite surface de référence.

L'invention à également pour objet une application mettant en oeuvre les traits techniques précédemment décrits et destinée à la surveillance des corps dans une piscine. Dans le cas de cette application, ledit fond est composé du fond et/ou des parois de la piscine. Dans le cas ou après discrimination des images de synthèse, on conclut qu'il y a un corps dans la piscine, ledit système comprend en outre :
- des moyens d'itération pour itérer la procédure de discrimination et pour distinguer un corps ayant une trajectoire suspecte, notamment un corps immobile ou un corps en coulée passive, d'un corps ayant une trajectoire normale,
- des moyens d'émission pour émettre un signal d'alerte lorsque le corps a une trajectoire suspecte pendant une période de temps anormalement longue.

De préférence cette application concerne le cas d'un corps situé à proximité du fond.

De préférence, dans le cas de cette application :
- au moins deux points de vue sont situés sur les parois de la piscine en des endroits appropriés pour balayer au moins une fraction du volume d'eau de la piscine,
- ladite surface de référence est sensiblement parallèle à la surface de l'eau de la piscine.

### Description détaillée

D'autres caractéristiques et avantages de l'invention apparaîtront à la lecture de la description de variantes de réalisation de l'invention, données à titre d'exemple indicatif et non limitatif, et de :
- la figure 1 qui représente une vue en perspective d'un objet situé devant un fond et de la projection en perspective de l'objet et de la représentation virtuelle du fond à partir d'un premier point de vue,
- la figure 2 qui représente une vue en perspective du même objet situé devant le même fond et de la projection en perspective de l'objet et de la représentation virtuelle du fond à partir d'un deuxième point de vue,
- la figure 3a qui représente une vue en perspective d'un objet situé devant un fond et sur lequel on a montré les pavés virtuels Zi, leur centre Ci ainsi que les directions spécifiques 3Di et 4Di associées aux points de vue 3 et 4.
- la figure 3b qui représente une vue en perspective d'un objet situé devant un fond après projection orthogonale sur un premier plan de référence associé à un premier point de vue et sur un deuxième plan de référence associé à un deuxième point de vue,
- la figure 4 qui représente une vue en perspective des images de synthèse dans le cas où il n'y a pas d'objet devant le fond.
- les figures 5a et 5b qui représentent les vues de dessus des deux plans de référence représentés sur la figure 3b,
- la figure 6 qui représente une vue en perspective d'une piscine dans laquelle est immergé un corps à proximité du fond,
- la figure 7 qui représente une vue schématique des dispositifs optoélectroniques selon une variante de réalisation de l'invention.

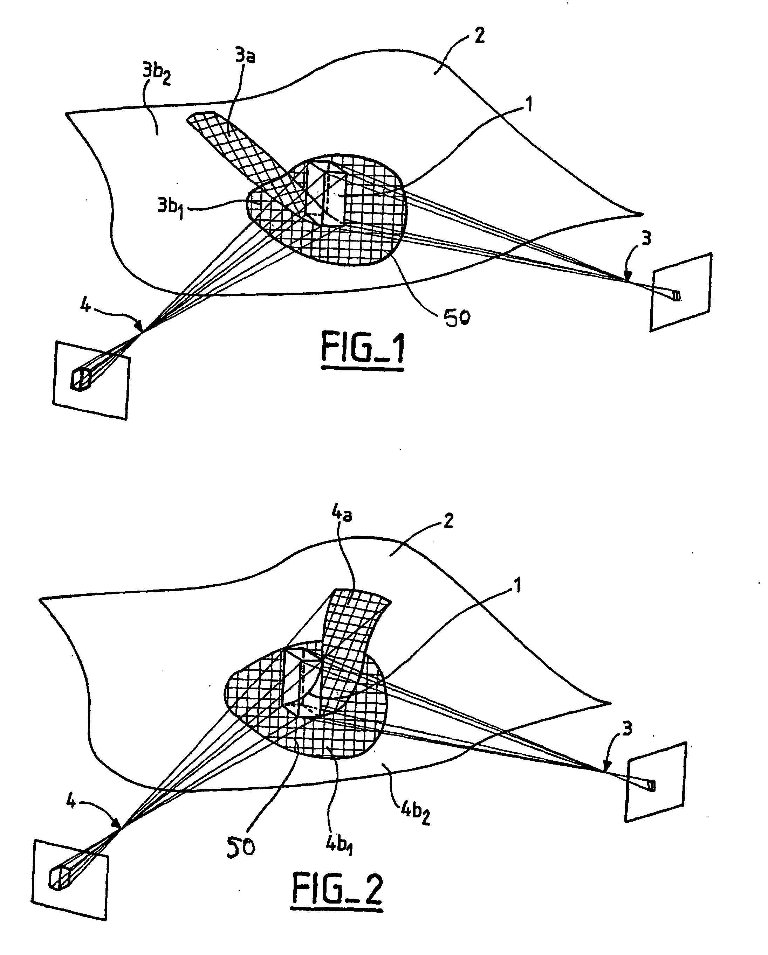

Dans le cas de la variante de réalisation représentée en se référant aux figures 1 à 7, la surface par rapport à laquelle on détecte et on détermine la position d'un objet, est un fond opaque. La description détaillée qui suit pourrait être appliquée par l'homme de métier au cas d'un objet situé devant ou derrière une surface transparente ou une surface virtuelle.

Sur les figures 1, 2, 3a et 3b on a représenté un objet 1 devant un fond 2. Le fond 2, bosselé, est délimité par un contour "carré" en forme de "lèvre", il présente une "tache de couleur" 50 contrastée par rapport au fond. On réalise par une transformation géométrique comprenant une projection en perspective sur ledit fond 2 à partir d'au moins deux points de vue distincts 3, 4 et pour chacun d'entre eux :
- une projection en perspective 3a, 4a de l'objet sur ledit fond et
- une représentation virtuelle 3b1, 3b2 ; 4b1, 4b2 des parties du fond non masquées par ladite projection en perspective de l'objet.

La référence 3b1 (respectivement 4b2) désigne la partie du fond (non masquée), vue du point de vue 3 (respect. 4), qui comporte une "tache de couleur".

La référence 3b2 (respectivement 4b2) désigne la partie du fond (non masquée), vue du point de vue 3 (respect. 4), qui ne comporte pas de "tache de couleur".

La représentation virtuelle 3b, 4b des parties du fond non masquées par ladite projection en *perspective* de l'objet 1 est la réunion des zones 3b1 et 3b2 (point de vue 3) et des zones 4b1 et 4b2 (point de vue 4).

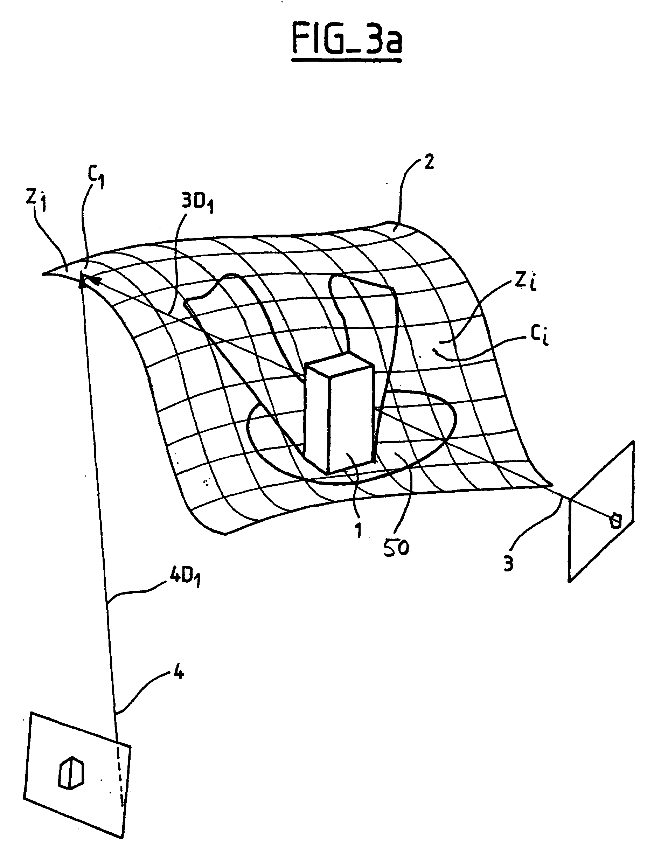

Sur la figure 3a, on a représenté le pavage du fond composé de pavés virtuels Zi comprenant chacun un centre Ci et deux directions spécifiques 3Di (resp. 3D1) et 4Di (resp. 4D1) obtenues en joignant les points de vue 3 et 4 au centre Ci (resp. C1) du pavé Zi (resp. Z1) considéré. Sur le pavé Z1 situé en haut et à gauche, on a montré son centre C1 ainsi que les directions spécifiques 3D1 et 4D1 associées.

Dans le cas ou la transformation géométrique ne comporte que la projection en perspective ci-dessus décrite, l'image de synthèse, au sens de la présente invention, (ci-après référencée 3c, 4c) est composée des projections en perspective 3a et 4a de l'objet sur ledit fond.

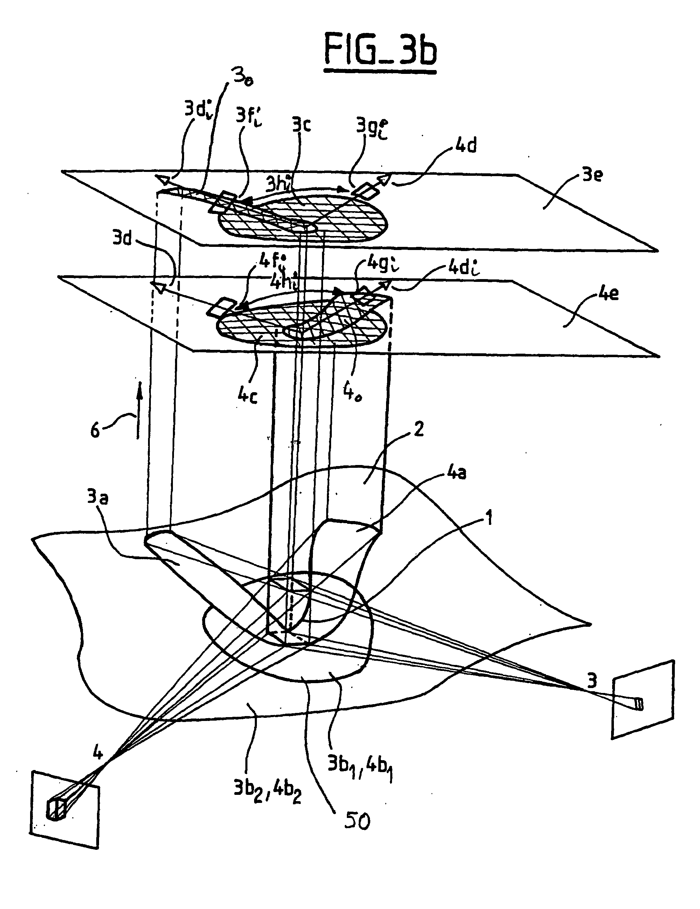

Sur la figure 3b on a montré comment on réalise l'image de synthèse 3c, 4c dans le cas ou la transformation géométrique comprend après une opération de projection en perspective une projection orthogonale 6 sur des surfaces de référence 3e, 4e associées aux points de vue 3 et 4.

Dans l'exemple de réalisation représenté sur la figure 3, chaque image de synthèse (respectivement 3c et 4c) est obtenue par projection orthogonale 6 et superposition de chaque projection en perspective (respectivement 3a et 4a) et de chaque représentation virtuelle du fond (respectivement 3b et 4b) sur des surfaces de référence planes (respectivement 3e et 4e). Les projections orthogonales, selon la direction 6, des projections virtuelles 3a et 4a sont respectivement référencées 3o, 4o, sur la figure 3b. On rappelle que chaque représentation virtuelle 3b, 4b des parties du fond non masquées par ladite projection en perspective 3a, 4a de l'objet sur le fond, est composée des parties 3b1, 3b2 ; 4b1, 4b2 ci-dessus définies.

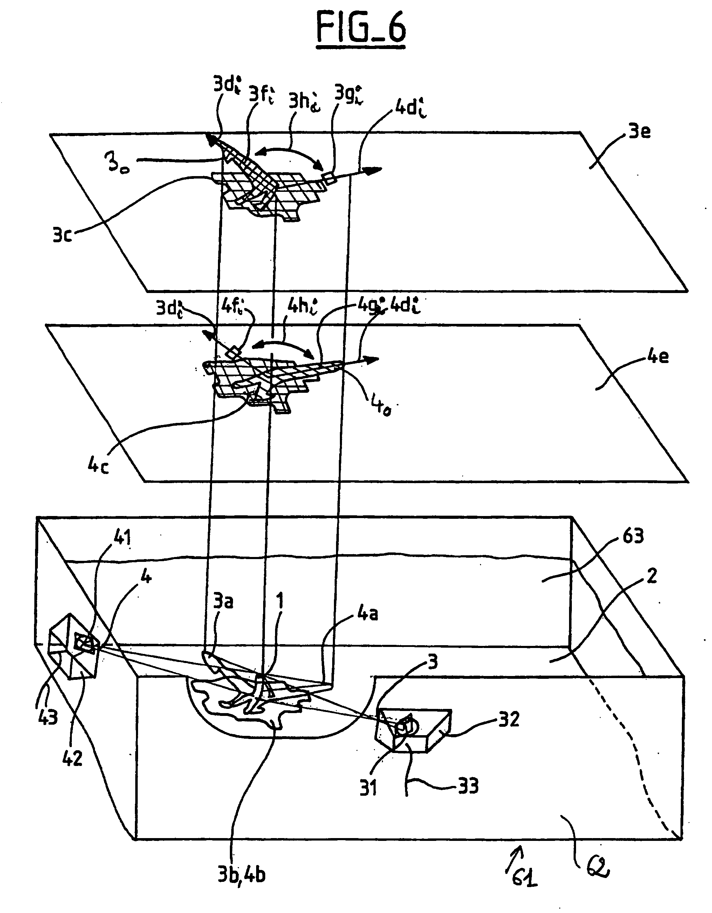

Pour la commodité de la description, les figures 1 à 3 sont des constructions géométriques. En fait, ainsi que l'on va maintenant le décrire, pour réaliser chacune desdites images de synthèse 3c, 4c de l'objet et du fond associées à un point de vue considéré 3, 4, on met en oeuvre des moyens physiques et des moyens de calcul. En premier lieu, en chaque point de vue 3, 4, on capte les émissions radioactives et/ou les rayonnements électromagnétiques (notamment lumineux) et/ou les vibrations mécaniques, notamment des ultra-sons, provenant de l'objet et du fond, de manière à produire un signal. Dans le cas de la variante de réalisation concernant la surveillance des piscines, représentée sur la figure 6, pour capter les rayonnements lumineux provenant de l'objet et du fond, on met en oeuvre, en chaque point de vue 3, 4, une caméra optoélectronique 31, 41, située dans un boîtier 32, 42 tel que décrit dans la demande de brevet SP2 (FR 96 10442 Poséidon) et dont on incorpore ici par référence la description. Le signal de sortie de la caméra est représentatif de l'image de l'objet 1 et du fond 2 produite par la caméra optoélectronique.

Il serait également possible d'utiliser un sonar en chaque point de vue 3, 4 et de capter l'écho émis par les différentes parties du corps 1 et du fond 2 et de produire un signal représentatif de leur forme et de leur contenu.

De manière connue en soi, on numérise le signal produit par la caméra et/ou le sonar puis on calcule à partir des données numérisées ainsi obtenues lesdites images de synthèse. Lorsque le fond 2 est plan et/ou lorsque l'on connaît une représentation analytique du fond, on peut calculer directement les projections virtuelles 3a, 4a de l'objet sur le fond 2 et/ou les représentations virtuelles 3b, 4b des parties du fond non masquées par lesdites projections virtuelles. Puis, on peut ensuite calculer les images de synthèse 3c et 4c par projection orthogonale 6 des projections virtuelles 3a, 4a et des représentations virtuelles 3b, 4b sur les plans de référence 3e et 4e, dont on connaît par ailleurs une représentation analytique. Lorsque le fond n'est pas plan ainsi que cela est représenté sur les figures 1 à 4, on échantillonne au préalable ledit fond, notamment en procédant à un relevé topographique de celui-ci, pour en donner un modèle numérique.

Les directions spécifiques virtuelles 3di et 4di de chacun des pavés virtuels zi des images de synthèses associé aux pavés virtuels Zi de la mosaïque composant le fond sont obtenues par projection orthogonale sur les plans de référence 3e et 4e des directions spécifiques 3Di et 4Di ci-dessus définies.

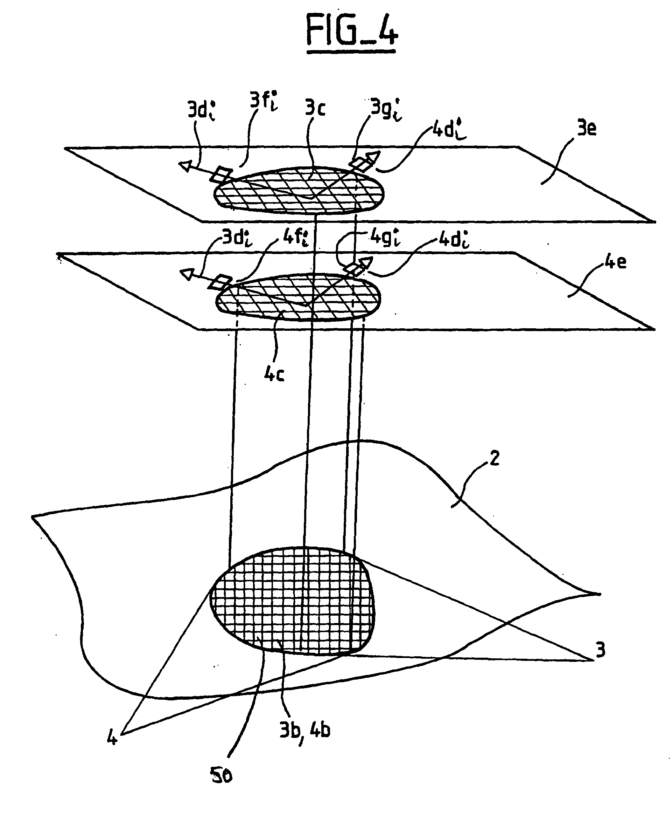

S'il n'y a pas d'objet 1 devant le fond (cas de la figure 4), les images de synthèse 3c et 4c sont réduites aux projections virtuelles du fond 2 sur les plans de référence 3e et 4e. Les deux projections virtuelles 3c et 4c sont semblables.

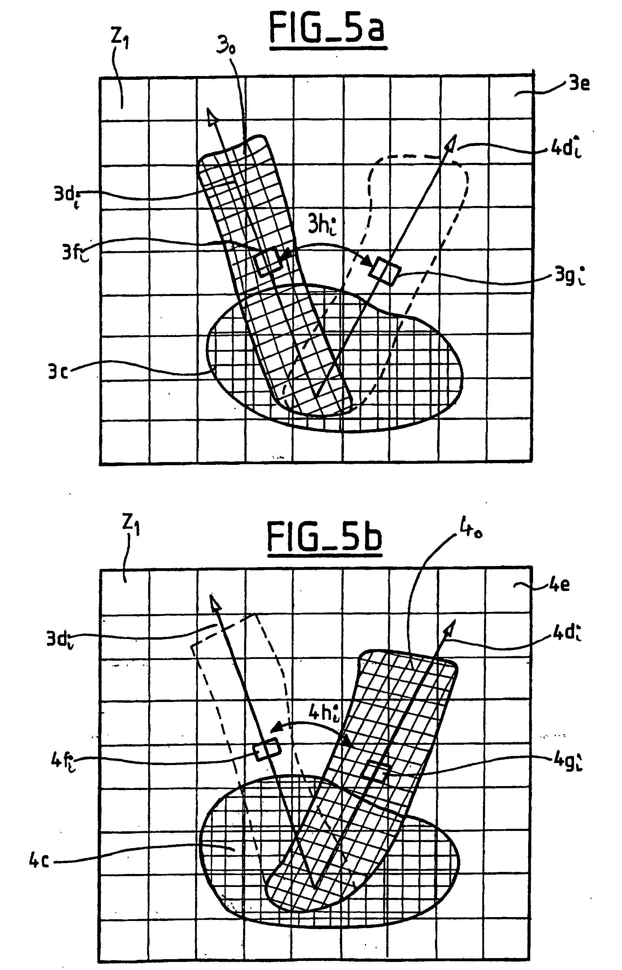

S'il y a un objet 1 devant le fond (cas des figures 5a et 5b), les images de synthèse 3c et 4c sont dissemblables. Elles comportent des zones distinctes 3o, 4o s'étendant selon les directions spécifiques virtuelles (3di, figure 5a) et (4di, figure 5b) associée(s) au(x) pavé(s) Zi situé(s) à l'aplomb de l'objet (en projection orthogonale sur les plans de référence 3e et 4e). Ces zones correspondent aux projections virtuelles 3a et 4a de l'objet sur le fond 2.

Pour discriminer entre les images de synthèse 3c, 4c et pour déterminer la présence d'un objet 1 par rapport à la surface 2 on procède comme suit: On sélectionne un couple d'images de synthèse 3c, 4c associé à au moins un couple de points de vue 3, 4. On explore (voir figure 5a et 5b) chaque image de synthèse 3c, 4c du couple sélectionné en choisissant des zones 3fi, 3gi (plan de référence 3e), 4fi, 4gi (plan de référence 4e) situées selon chacune des directions spécifiques virtuelles 3di, 4di de chaque pavé virtuel zi. Puis, on compare 3hi, 4hi lesdites zones 3fi, 3gi, 4fi, 4gi en recherchant des différences antagonistes d'une image de synthèse 3c à l'autre 4c.

Plus particulièrement dans le cas ou les images de synthèse 3c, 4c présentent des zones 3fi, 3gi, 4fi, 4gi de différentes couleurs, on procède de la manière suivante pour rechercher des différences antagonistes sur chaque image de synthèse 3c, 4c du couple sélectionné. On recherche des inversions de contrastes de couleur entre des zones 3fi, 3gi, 4fi, 4gi situées selon chacune des directions spécifiques virtuelles 3di, 4di de chaque pavé zi. Des images de synthèse présentant des zones de différentes couleurs sont notamment obtenues lorsque l'on met en oeuvre des caméras vidéos.

Si pour un certain nombre n de pavés zi (n pouvant être égal à 1) il apparaît des différences antagonistes d'une image de synthèse à l'autre, par exemple si 3fi est gris alors que 3gi ne l'est pas et si 4fi n'est pas gris alors que 4gi l'est, on conclut a fortiori qu'il y a un objet devant le fond. En analysant les contrastes de couleur selon les directions spécifiques virtuelles 3di et 4di, en recherchant les inversions de contrastes on peut déduire s'il y a ou non un objet 1 devant le fond. Toutefois, la recherche des différences antagonistes peut porter sur d'autres éléments que les couleurs et les nuances de gris. On peut également trouver des différences antagonistes dans les formes, dans l'enveloppe des contours.

On a représenté en se référant à la figure 6 une application du procédé et du système selon l'invention à la surveillance des corps 1 dans une piscine 61. On reconnaît sur la figure 6, des éléments qui ont été déjà décrits en se référant aux figures 1 à 5 ; ils portent les mêmes références. Par exemple, le fond 2 est le fond de la piscine 61 et/ou les parois 62 de celle-ci. L'objet 1 est le corps du baigneur accidenté. Dans le cas de cette application, on procède comme il a été décrit ci-dessus pour discriminer les images de synthèse et déterminer s'il y a un corps devant le fond, plus particulièrement à proximité de celui-ci. Ensuite, on itère la procédure de discrimination pour distinguer, en effectuant une analyse des mouvements, un corps ayant une trajectoire suspecte, notamment un corps immobile ou un corps en coulée passive, d'un corps ayant une trajectoire normale. On émet un signal d'alerte lorsque le corps a une trajectoire suspecte pendant une période de temps anormalement longue.

Dans le cas de l'application du procédé et du système selon l'invention à la surveillance d'une piscine, les deux caméras optiques 31 et 41 logées dans les boîtiers 32 et 42 associés aux points de vue 3 et 4, sont disposées sur les parois 62 formant entre elles un angle de 90°. Une telle situation est appropriée pour balayer au moins une fraction du volume d'eau de la piscine. A cet égard on se reportera à la demande de brevet SP2 (FR 96 10442 Poséidon) incorporée ici par référence. Les plans de référence 3e et 4e sont sensiblement parallèles à la surface 63 de l'eau de la piscine.

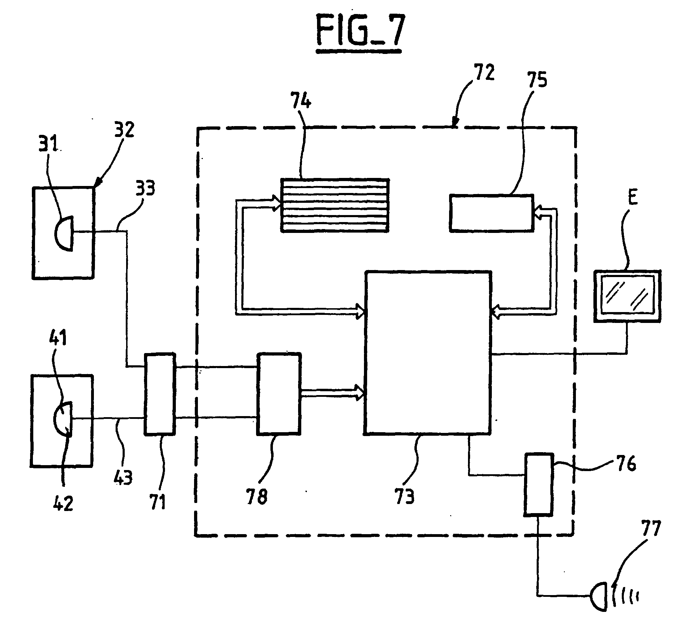

On va maintenant décrire en se référant à la figure 7 une vue schématique des dispositifs optoélectroniques et des moyens de calcul selon une variante de réalisation de l'invention.

Les câbles 33, 43 qui traversent les boîtiers 32, 42 contenant les caméras 31, 41, sont des câbles coaxiaux reliés, par l'intermédiaire de moyens de multiplexage 71, à un micro-ordinateur 72, par exemple du type "compatible IBM", organisé autour d'un microprocesseur PENTIUM. Sur chaque câble 33, 43 on établit une tension continue destinée à l'alimentation de la caméra 31, 41 correspondante. Ladite caméra 31, 41 envoie sur le câble 33, 43 une modulation qui constitue le signal à traiter. Avant l'entrée dans les moyens de multiplexage 71, on assure la séparation de la composante continue grâce à des moyens de démodulation qui fournissent, uniquement sur les moyens de multiplexage, le signal émanant de la caméra type "CCD". Le micro-ordinateur 72 comprend une unité centrale de traitement 73, des moyens de stockage temporaire, ou mémoire vive 74, des moyens de stockage permanent, ou disque dur 75, et une carte de télécommande 76 susceptible de commander des moyens avertisseurs 77. Par ailleurs, le micro-ordinateur 72 est relié à un écran de contrôle E, ledit écran est un écran tactile permettant une commande de fonctionnement. Le micro-ordinateur 72 est en configuration "multimédia" et est équipé d'une carte d'acquisition vidéo 78 constituant des moyens de numérisation des signaux électriques fournis par les caméras 31, 41.

Les images, sous forme de signaux électriques, sont reçues, par l'intermédiaire des moyens de démodulation et des moyens de multiplexage désignés par la référence 71 dans leur ensemble, à raison de 25 images par seconde, par la carte d'acquisition vidéo 78, qui les transforme en des images numériques.

Grâce au multiplexage, il est possible de traiter les caméras 31, 41 avec la même carte vidéo 78. Il est à noter que le nombre des caméras traitées par une même carte pourrait être supérieur à deux.

L'unité centrale de traitement 73 permet d'effectuer les divers calculs permettant de produire les images de synthèse 3c, 4c. L'unité centrale de traitement 73 effectue également les calculs permettant de discriminer entre les images de synthèse 3c, 4c, selon qu'il y a un objet ou non devant le fond, en appliquant les procédures ci-dessus décrites.

Des moyens de stockage 74, 75 des données numériques des images de synthèse à des instants successifs t, (t + Dt) sont prévus. Ces moyens de stockage 74, 75 sont constitués par des moyens de mémoire du micro-ordinateur 72, notamment des moyens de mémoire vive internes 74 et le disque dur 75 de l'ordinateur. Des moyens de comparaison entre les images de synthèse à des instants successifs t et (t + Dt) sont prévus. Les moyens de comparaison sont formés par l'unité centrale de traitement 73 de l'ordinateur et un logiciel approprié stocké dans une zone de la mémoire vive interne 74. L'intervalle de temps Dt entre deux instants t et (t + Dt) pris en considération est suffisant pour que, dans le cas d'un mouvement normal d'un nageur, les différences entre les deux images successives traduisent un tel mouvement. L'intervalle de temps Dt est cependant aussi réduit que possible pour qu'une alerte soit déclenchée sans retard en cas de situation suspecte. Cet intervalle Dt peut être de l'ordre de quelques dixièmes de seconde. Les moyens de comparaison calculent, entre deux instants t et (t + Dt), les différences entre deux matrices d'images de synthèse. Les moyens de comparaison permettent ainsi d'obtenir les zones de changement entre deux images à des instants successifs, c'est-à-dire les zones de mouvement entre les deux instants considérés. L'unité centrale de traitement 73 combinée avec un logiciel approprié, constitue en outre des moyens d'estimation de la nature d'un corps 1, dont l'image de synthèse est obtenue (corps humain ou non), de la trajectoire et des changements d'attitude de ce corps. L'unité centrale 73 et le logiciel sont, en outre, prévus pour constituer des moyens de décision propres à déclencher une alarme en cas de trajectoire ou de mouvements suspects du corps observé. Du fait que l'on connaît la matrice de l'image initiale (piscine vide), on peut dénombrer et suivre individuellement les différentes formes se déplaçant dans la piscine, captées par les caméras.

## Revendications

1. Procédé pour détecter un objet (1) par rapport à une surface (2), notamment une surface virtuelle, ladite surface (2) n'étant pas nécessairement plane ;
ledit procédé comprenant l'étape :
- de réaliser par une transformation géométrique comprenant au moins une projection en perspective (3a, 4a) dudit objet (1) sur ladite surface (2) à partir d'au moins deux points de vue distincts (3, 4) et pour chacun d'entre eux une image de synthèse (3c, 4c) associée au point de vue considéré,
- de discriminer entre les images de synthèse (3c, 4c) pour détecter la présence et déterminer la position dudit objet (1) par rapport à ladite surface (2) ;
ledit procédé comprenant pour discriminer entre les images de synthèse (3c, 4c) :
- l'étape de décomposer ladite surface (2) en une mosaïque de pavés (Zi) comportant chacun un centre (Ci),
- l'étape d'associer à chaque centre (Ci) et à chaque point de vue (3, 4) une direction spécifique (3Di, 4Di) ;
de sorte que chaque image de synthèse (3c, 4c) est décomposée en pavés virtuels (zi) comportant chacun autant de directions spécifiques virtuelles (3di, 4di) qu'il y a de points de vue ;
ledit procédé comprenant en outre pour discriminer entre les images de synthèse (3c, 4c) :
- l'étape de sélectionner au moins un couple d'images de synthèse (3c, 4c) associé à au moins un couple de points de vue (3, 4),
- l'étape de choisir sur chaque image de synthèse (3c, 4c) du couple sélectionné des zones (3fi, 3gi ; 4fi, 4gi) situées selon chacune des directions spécifiques virtuelles (3di, 4di) de chaque pavé virtuel (zi) ;
- l'étape de comparer (3hi, 4hi) lesdites zones (3fi, 3gi ; 4fi, 4gi) en recherchant des différences antagonistes d'une image de synthèse (3c) à l'autre (4c).

2. Procédé selon la revendication 1 tel que s'il apparaît des différences antagonistes lors de la recherche on conclut qu'il y a un objet (1).

3. Procédé selon la revendication 2 tel que, pour déterminer si un objet (1) est devant et/ou derrière ladite surface (2), on choisit sur chacune des directions spécifiques virtuelles (3di, 4di) les zones de comparaison (3fi, 3gi ; 4fi, 4gi) d'un côté et/ou de l'autre desdits centres (ci) desdits pavés virtuels (zi) par rapport à chacun des points de vue.

4. Procédé selon l'une quelconque des revendications 2 ou 3 tel que, pour déterminer si ledit objet (1) s'étend plus ou moins loin par rapport à ladite surface (2), on choisit sur chacune des directions spécifiques virtuelles (3di, 4di) des zones de comparaison (3fi, 3gi ; 4fi, 4gi) plus ou moins éloignées desdits centres (ci) des pavés virtuels (zi).

5. Procédé selon l'une quelconque des revendications 2 à 4, ledit procédé comprenant en outre l'étape de déduire la position dudit objet le long de la surface en fonction de la position sur la surface des pavés (zi) pour lesquels des différences antagonistes ont été trouvées.

6. Procédé selon l'une quelconque des revendications 1 à 5 tel que pour réaliser chacune desdites images de synthèse (3c, 4c) associées à un point de vue considéré,
- on capte (31, 41), en chaque point de vue, des émissions radioactives et/ou des rayonnements électromagnétiques (notamment lumineux) et/ou des vibrations mécaniques provenant dudit objet (1), de manière à produire un signal,
- on numérise (78) ledit signal pour obtenir des données numérisées,
- on calcule (73), à partir des données ainsi obtenues, lesdites images de synthèse (3c, 4c).

7. Procédé selon la revendication 6 tel que pour capter les rayonnements électromagnétiques, notamment lumineux, et/ou les vibrations mécaniques, notamment les ultrasons,
- on met en oeuvre une caméra optique (31, 41) et/ou un sonar en chaque point de vue.

8. Procédé selon l'une quelconque des revendications 6 ou 7 tel que lesdites images de synthèse (3c, 4c) présentent des zones (3fi, 3gi ; 4fi, 4gi) de différentes couleurs ; ledit procédé étant tel que pour rechercher des différences antagonistes sur chaque image de synthèse (3c, 4c) du couple sélectionné, on recherche des inversions de contrastes de couleur entre des zones (3fi, 3gi ; 4fi, 4gi) situées selon chacune des directions spécifiques virtuelles (3di, 4di) de chaque pavé (zi).

9. Procédé selon l'une quelconque des revendications 1 à 8 plus particulièrement destiné à détecter un objet (1) devant un fond (200), ledit fond (200) étant composé de ladite surface (2).

10. Procédé selon la revendication 9 tel que
- ladite transformation géométrique comprend en outre une projection, notamment par projection orthogonale (6), sur une surface de référence (3e, 4e) associée à un point de vue (3, 4) considéré, de ladite projection en perspective (3a, 4a) dudit objet (1) sur ledit fond (200) à partir dudit point de vue (3, 4) considéré,
- ladite image de synthèse (3c, 4c) associée au point de vue (3, 4) considéré est composée :
• de l'image (3o, 4o) réalisée par application de ladite transformation géométrique audit objet (1), et en outre de la superposition sur ladite surface de référence (3e, 4e)
• de l'image réalisée par application de ladite transformation géométrique à une représentation virtuelle (3b, 4b) composée des parties du fond (3b1, 3b2 ; 4b1, 4b2) non masquées par ladite projection en perspective (3a, 4a) de l'objet (1).

11. Procédé selon la revendication 10 tel que pour réaliser ladite image de synthèse (3c, 4c) sur une surface de référence (3e, 4e) :
- on calcule (73), à partir desdites données numérisées, les données relatives à l'image de synthèse (3c, 4c) sur ladite surface de référence (3e, 4e).

12. Application du procédé selon l'une quelconque des revendications 9 à 11 à la surveillance des corps (100) dans une piscine (61) ; ledit fond (200) étant le fond (200) et/ou les parois (62) de la piscine (61) ; ladite application étant telle que dans le cas où, après discrimination des images de synthèse (3c, 4c), on conclut qu'il y a un corps (100) dans la piscine (61)
- on itère la procédure de discrimination pour distinguer un corps (100) ayant une trajectoire suspecte, notamment un corps (100) immobile ou un corps (100) en coulée passive, d'un corps (100) ayant une trajectoire normale,
- on émet (77) un signal d'alerte lorsque le corps (100) a une trajectoire suspecte pendant une période de temps anormalement longue.

13. Application selon la revendication 12 au cas d'un corps (100) situé à proximité du fond (200).

14. Application selon l'une quelconque des revendications 12 ou 13 telle que
- au moins deux points de vue (3, 4) sont situés sur les parois (62) de la piscine (61) en des endroits appropriés pour balayer au moins une fraction du volume d'eau de la piscine (61),
- ladite surface de référence (3e, 4e) est sensiblement parallèle à la surface (63) de l'eau de la piscine (61).

15. Système pour détecter un objet (1) par rapport à une surface (2), notamment une surface virtuelle, ladite surface (2) n'étant pas nécessairement plane ;
ledit système comprenant :
- des moyens de détection (31, 41) et des premiers moyens de calcul d'une unité centrale de traitement (73) pour réaliser, par une transformation géométrique comprenant au moins une projection en perspective (3a, 4a) dudit objet (1) sur ladite surface (2) à partir d'au moins deux points de vue distincts (3, 4) et pour chacun d'entre eux, une image de synthèse (3c, 4c) associée au point de vue considéré,
- des moyens de discrimination (73) pour discriminer entre les images de synthèse (3c, 4c) pour détecter la présence et déterminer la position dudit objet (1) par rapport à ladite surface (2) ;
lesdits moyens de discrimination dudit système comprenant :
- des moyens de partition pour décomposer ladite surface (2) en une mosaïque de pavés (Zi) comportant chacun un centre (Ci) et autant de directions spécifiques (3Di, 4Di) qu'il y a de points de vue (3, 4) ;
de sorte que chaque image de synthèse (3c, 4c) est décomposée en pavés virtuels (zi) comportant chacun autant de directions spécifiques virtuelles (3di, 4di) qu'il y a de points de vue ;
lesdits moyens de discrimination comprenant en outre pour discriminer entre les images de synthèse (3c, 4c):
- des moyens de sélection pour sélectionner au moins un couple d'images de synthèse (3c, 4c) associé à au moins un couple de points de vue (3, 4),
- des moyens pour choisir sur chaque image de synthèse (3c, 4c) du couple sélectionné des zones (3fi, 3gi ; 4fi, 4gi) situées selon chacune des directions spécifiques virtuelles (3di, 4di) de chaque pavé virtuel (zi) ;
- des moyens de comparaison pour comparer (3hi, 4hi) lesdites zones (3fi, 3gi ; 4fi, 4gi) en recherchant des différences antagonistes d'une image de synthèse (3c) à l'autre (4c).

16. Système selon la revendication 15 tel que s'il apparaît des différences antagonistes lors de la recherche on conclut qu'il y a un objet (1).

17. Système selon la revendication 16 tel que, pour déterminer si un objet (1) est devant et/ou derrière ladite surface (2), lesdits moyens pour choisir des zones (3fi, 3gi ; 4fi, 4gi) sur chacune des directions spécifiques virtuelles (3di, 4di) choisissent des zones de comparaison (3fi, 3gi ; 4fi, 4gi) d'un côté et/ou de l'autre desdits centres (ci) desdits pavés virtuels (zi) par rapport à chacun des points de vue.

18. Système selon l'une quelconque des revendications 16 ou 17 tel que, pour déterminer si ledit objet (1) s'étend plus ou moins loin par rapport à ladite surface (2), lesdits moyens pour choisir des zones (3fi, 3gi ; 4fi, 4gi) sur chacune des directions spécifiques virtuelles (3di, 4di) choisissent des zones de comparaison (3fi, 3gi ; 4fi, 4gi) plus ou moins éloignées desdits centres (ci) des pavés virtuels (zi).

19. Système selon l'une quelconque des revendications 16 à 18 tel que les moyens de discrimination pour discriminer entre les images de synthèse (3c, 4c) déterminent la position dudit objet le long de la surface en fonction de la position sur la surface des pavés (zi) pour lesquels des différences antagonistes ont été trouvées.

20. Système selon l'une quelconque des revendications 15 à 19 tel que, pour réaliser chacune desdites images de synthèse (3c, 4c) associées à un point de vue considéré, ledit système comprend
- des capteurs (31, 41), en chaque point de vue, lesdits capteurs comportant des moyens pour capter des émissions radioactives et/ou des rayonnements électromagnétiques (notamment lumineux) et/ou des vibrations mécaniques provenant dudit objet (1), de manière à produire un signal,
- des moyens de numérisation (78) pour numériser ledit signal et pour obtenir des données numérisées,
- des moyens de calcul (73) pour calculer, à partir des données ainsi obtenues, lesdites images de synthèse (3c, 4c).

21. Système selon la revendication 20 tel que lesdits capteurs pour capter des rayonnements électromagnétiques, notamment lumineux, et/ou des vibrations mécaniques, notamment des ultrasons, sont des caméras optiques (31, 41) et/ou des sonars situés en chaque point de vue.

22. Système selon l'une quelconque des revendications 20 ou 21 tel que lesdites images de synthèse (3c, 4c) présentent des zones (3fi, 3gi ; 4fi, 4gi) de différentes couleurs ; ledit système étant tel que pour rechercher des différences antagonistes sur chaque image de synthèse (3c, 4c) du couple sélectionné, lesdits moyens de discrimination comprennent des moyens pour rechercher des inversions de contrastes de couleur entre des zones (3fi, 3gi ; 4fi, 4gi) situées selon chacune des directions spécifiques virtuelles (3di, 4di) de chaque pavé (zi).

23. Système selon l'une quelconque des revendications 15 à 22 plus particulièrement destiné à détecter un objet (1) devant un fond (200), ledit fond (200) étant composé de ladite surface (2).

24. Système selon la revendication 23 tel que
- ladite transformation géométrique comprend en outre une projection, notamment par projection orthogonale (6), sur une surface de référence (3e, 4e) associée à un point de vue (3, 4) considéré, de ladite projection en perspective (3a, 4a) dudit objet (1) sur ledit fond (200) à partir dudit point de vue (3, 4) considéré,
- ladite image de synthèse (3c, 4c) associée au point de vue (3, 4) considéré est composée :
• de l'image (3o, 4o) réalisée par application de ladite transformation géométrique audit objet (1), et en outre de la superposition sur ladite surface de référence (3e, 4e)
• de l'image réalisée par application de ladite transformation géométrique à une représentation virtuelle (3b, 4b) composée des parties du fond (3b1, 3b2 ; 4b1, 4b2) non masquées par ladite projection en perspective (3a, 4a) de l'objet (1).

25. Système selon la revendication 24 tel que pour réaliser ladite image de synthèse (3c, 4c) sur une surface de référence (3e, 4e) :
- lesdits moyens de calcul (73) calculent à partir desdites données numérisées, les données relatives à l'image de synthèse (3c, 4c) sur ladite surface de référence (3e, 4e).

26. Application du système selon l'une quelconque des revendications 23 à 25 à la surveillance des corps (100) dans une piscine (61) ; ledit fond (200) étant le fond (200) et/ou les parois (62) de la piscine (61) ; ladite application étant telle que dans le cas où, après discrimination des images de synthèse (3c, 4c), on conclut qu'il y a un corps (100) dans la piscine (61) ledit système comprend en outre
- des moyens d'itération pour itérer la procédure de discrimination et pour distinguer un corps (100) ayant une trajectoire suspecte, notamment un corps (100) immobile ou un corps (100) en coulée passive, d'un corps (100) ayant une trajectoire normale,
- des moyens d'émission (77) pour émettre un signal d'alerte lorsque le corps (100) a une trajectoire suspecte pendant une période de temps anormalement longue.

27. Application selon la revendication 26 au cas d'un corps (100) situé à proximité du fond (200).

28. Application selon l'une quelconque des revendications 26 ou 27 ledit système étant tel que
- au moins deux points de vue (3, 4) sont situés sur les parois (62) de la piscine (61) en des endroits appropriés pour balayer au moins une fraction du volume d'eau de la piscine (61),
- ladite surface de référence (3e, 4e) est sensiblement parallèle à la surface (63) de l'eau de la piscine (61).

## Patentansprüche

1. Verfahren zum Detektieren eines Gegenstandes (1) in Bezug auf eine Oberfläche (2), insbesondere eine virtuelle Oberfläche, wobei die Oberfläche (2) nicht notwendigerweise eben ist; mit folgenden Verfahrensschritten :
- Ein zu einem bestimmten Blickpunkt gehöriges Synthesebild (3c, 4c) wird erzeugt durch geometrische Transformation des Gegenstandes (1) mit mindestens einer perspektivischen Projektion (3a, 4a) auf die Oberfläche (2), und zwar ausgehend von mindestens zwei verschiedenen Blickpunkten (3, 4) und für jeden dieser Blickpunkte,
- zum Detektieren der Anwesenheit des Gegenstandes (1) und zur Bestimmung seiner Position in Bezug auf die Oberfläche (2) wird zwischen den Synthesebildern (3c, 4c) eine Unterscheidung durchgeführt;
wobei zur Unterscheidung zwischen den Synthesebildern (3c, 4c) folgende Schritte vorgesehen sind:
- die Oberfläche (2) wird in ein Mosaik von Rasterflächen (Zi) zerlegt, die jeweils einen Mittelpunkt (Ci) aufweisen,
- jedem Mittelpunkt (Ci) und jedem Blickpunkt (3, 4) wird eine spezifische Richtung (3Di, 4Di) zugeordnet;
derart, dass jedes Synthesebild (3c, 4c) in virtuelle Rasterflächen (zi) zerlegt wird, wobei jede Rasterfläche so viele virtuelle spezifische Richtungen (3di, 4di) aufweist, wie Blickpunkte vorhanden sind;
und wobei zur Unterscheidung zwischen den Synthesebildern (3c, 4c) folgende weitere Schritte vorgesehen sind:
- mindestens ein Paar von Synthesebildern (3c, 4c) wird ausgewählt, das mindestens einem Paar von Blickpunkten (3, 4) zugeordnet ist;
- auf jedem Synthesebild (3c, 4c) des ausgewählten Paares werden Zonen (3fi, 3gi, 4fi, 4gi) gewählt, die in jeder der verschiedenen virtuellen spezifischen Richtungen (3di, 4di) jeder virtuellen Rasterfläche (zi) liegen;
- die Zonen (3fi, 3gi; 4fi, 4gi) werden miteinander verglichen (3hi, 4hi), um gegensätzliche Unterschiede des einen Synthesebildes (3c) gegenüber dem anderen Synthesebild (4c) zu ermitteln.

2. Verfahren nach Anspruch 1, **dadurch gekennzeichnet, dass** beim Auftreten von gegensätzlichen Unterschieden bei dem Vergleich darauf geschlossen wird, dass ein Gegenstand (1) vorhanden ist.

3. Verfahren nach Anspruch 2, **dadurch gekennzeichnet, dass** zur Bestimmung, ob sich ein Gegenstand (1) vor und/oder hinter der Oberfläche (2) befindet, in jeder virtuellen spezifischen Richtung (3di, 4di) die Vergleichszonen (3fi, 3gi; 4fi, 4gi) auf der einen Seite und/oder der anderen Seite der Mittelpunkte (ci) der virtuellen Rasterflächen (zi) für jeden Blickpunkt ausgewählt werden.

4. Verfahren nach einem der Ansprüche 2 oder 3, **dadurch gekennzeichnet, dass** zur Bestimmung, ob sich der Gegenstand (1) mehr oder weniger weit von der Oberfläche (2) entfernt befindet, in jeder der virtuellen spezifischen Richtungen (3di, 4di) diejenigen Vergleichszonen (3fi, 3gi; 4fi, 4gi) ausgewählt werden, die mehr oder weniger weit von den Mittelpunkten (ci) der virtuellen Rasterflächen (zi) entfernt liegen.

5. Verfahren nach einem der Ansprüche 2 bis 4, **dadurch gekennzeichnet, dass** die Position des Gegenstandes längs der Oberfläche in Abhängigkeit von der Position auf der Oberfläche derjenigen Rasterflächen (zi) ermittelt wird, für welche gegensätzliche Unterschiede gefunden wurden.

6. Verfahren nach einem der Ansprüche 1 bis 5, **dadurch gekennzeichnet, dass** zur Erzeugung jedes der zu einem bestimmten Blickpunkt gehörigen Synthesebilder (3c, 4c),
- an jedem Blickpunkt radioaktive Strahlungen und/oder elektromagnetische Strahlungen (insbesondere Licht) und/oder mechanische Schwingungen des Gegenstandes (1) empfangen werden (31, 41), um ein Signal zu erzeugen,
- das Signal zur Gewinnung digitaler Daten digitalisiert wird (78),
- die Synthesebilder (3c, 4c) anhand der so erhaltenen Daten berechnet werden (73).

7. Verfahren nach Anspruch 6, **dadurch gekennzeichnet, dass** zum Empfangen der elektromagnetischen Strahlungen, insbesondere von Licht, und/oder der mechanischen Schwingungen, insbesondere von Ultraschall,
- an jedem Blickpunkt eine optische Kamera (31, 41) und/oder ein Sonar eingesetzt wird.

8. Verfahren nach einem der Ansprüche 6 oder 7, wobei die Synthesebilder (3c, 4c) Zonen (3fi, 3gi; 4fi, 4gi) unterschiedliche Farben aufweisen, **dadurch gekennzeichnet, dass** zur Ermittlung der gegensätzlichen Unterschiede auf jedem Synthesebild (3c, 4c) des ausgewählten Paares Farbkontrastumkehrungen zwischen den Zonen (3fi, 3gi; 4fi, 4gi) ermittelt werden, die in jeder der virtuellen spezifischen Richtungen (3di, 4di) jeder Rasterfläche (zi) liegen.

9. Verfahren nach einem der Ansprüche 1 bis 8, welches insbesondere zum Detektieren eines Gegenstandes (1) vor einem Hintergrund (200) bestimmt ist, **dadurch gekennzeichnet dass** der Hintergrund (200) aus der Oberfläche (2) besteht.

10. Verfahren nach Anspruch 9, **dadurch gekennzeichnet, dass**
- die geometrische Transformation ferner eine von einem bestimmten Blickpunkt (3, 4) ausgehende, insbesondere rechtwinklige Projektion (6) auf eine Bezugsoberfläche (3e, 4e) enthält, welche zu einem bestimmten Blickpunkt (3, 4) gehört, wobei es sich um die Projektion der erwähnten perspektivischen Projektion (3a, 4a) des Gegenstandes (1) auf den Hintergrund (100) in Abhängigkeit von dem bestimmten Blickpunkt (3, 4) handelt,
- das zu dem bestimmten Blickpunkt (3, 4) gehörige Synthesebild (3c, 4c) zusammengesetzt ist aus:
• dem Bild (3o, 4o), das durch Anwendung der geometrischen Transformation auf den Gegenstand (1) und ferner durch Überlagerung auf die Bezugsoberfläche (3e, 4e) erzeugt wird,
• dem Bild, das durch Anwendung der geometrischen Transformation auf eine virtuelle Darstellung (3b, 4b) erzeugt wird, die aus Teilen des Hintergrundes (3bi, 3b2; 4b1, 4b2) besteht, welche durch die perspektivische Projektion (3a, 4a) des Gegenstandes (1) nicht verdeckt sind.

11. Verfahren nach Anspruch 10, **dadurch gekennzeichnet, dass** zur Erzeugung der Synthesebilder (3c, 4c) auf einer Bezugsoberfläche (3e, 4e) folgender Verfahrensschritt durchgeführt wird:
- anhand der erwähnten digitalen Daten werden die Daten berechnet (73), die sich auf das Synthesebild (3c, 4c) auf der erwähnten Bezugsoberfläche (3e, 4e) beziehen.

12. Anwendung des Verfahrens nach einem der Ansprüche 9 bis 11 auf die Überwachung von Körpern (100) in einem Schwimmbecken (61), wobei der Boden (200) und/oder die Seitenwände (62) des Schwimmbeckens (61) den Hintergrund (200) bilden, **dadurch gekennzeichnet, dass** für den Fall, dass nach Unterscheidung der Synthesebilder (3c, 4c) darauf zu schließen ist, dass sich ein Körper (100) im Schwimmbecken (61) befindet,
- der Unterscheidungsschritt wiederholt wird, um einen Körper (100), der einer verdächtigen Bahn folgt, insbesondere ein unbeweglicher Körper (100) oder ein passiv sinkender Körper (100), von einem Körper (100) zu unterscheiden, der einer normalen Bahn folgt,
- ein Alarmsignal (77) erzeugt wird, wenn der Körper (100) während eines ungewöhnlich langen Zeitraumes einer verdächtigen Bahn folgt.

13. Anwendung nach Anspruch 12 auf den Fall, dass sich ein Körper (100) in der Nähe des Bodens (200) befindet.

14. Anwendung nach einem der Ansprüche 12 oder 13, **dadurch gekennzeichnet, dass**
- mindestens zwei Blickpunkte (3, 4) an geeignete Stellen der Seitenwände (62) des Schwimmbeckens (61) gelegt werden, um mindestens einen Teil des Wasservolumens des Schwimmbeckens (61) abzutasten,
- die Bezugsoberfläche (3e, 4e) genau parallel zur Wasseroberfläche (63) des Schwimmbeckens (61) verläuft.

15. System zum Detektieren eines Gegenstandes (1) in Bezug auf eine Oberfläche (2), insbesondere eine virtuelle Oberfläche, wobei die Oberfläche (2) nicht notwendigerweise eben ist; mit folgenden Merkmalen:
- Eine Detektionseinrichtung (31, 41) und eine erste Recheneinrichtung als Bestandteil einer zentralen Verarbeitungseinheit (73), welche durch geometrische Transformation mit mindestens einer perspektivischen Projektion (3a, 4a) des Gegenstandes (1) auf die Oberfläche (2), ausgehend von mindestens zwei verschiedenen Blickpunkten (3, 4) und für jeden dieser Blickpunkte, ein
- zu dem betreffenden Blickpunkt gehöriges Synthesebild (3c, 4c) erzeugt,
- eine Unterscheidungseinrichtung (73) für die Synthesebilder (3c, 4c) zur Detektion der Anwesenheit des Gegenstandes (1) und zur Bestimmung seiner Position in Bezug auf die Oberfläche (2);
wobei die Unterscheidungseinrichtung folgende Merkmale aufweist:
- eine Teilungseinrichtung, welche die Oberfläche (2) in ein Mosaik von Rasterflächen (Zi) mit jeweils einem Mittelpunkt (Ci) und genauso vielen spezifischen Richtungen (3Di, 4Di) wie Blickpunkten (3, 4) zerlegt, derart, dass
jedes Synthesebild (3c, 4c) in virtuelle Rasterflächen (zi) zerlegt wird, wobei jede Rasterfläche so viele virtuelle spezifische Richtungen (3di, 4di) aufweist, wie Blickpunkte (3, 4) vorhanden sind;
wobei die Unterscheidungseinrichtung für die Synthesebilder (3c, 4c) ferner folgende Merkmale aufweist:
- eine Auswahleinrichtung, um mindestens ein Paar von Synthesebildern (3c, 4c) auszuwählen, das mindestens einem Paar von Blickpunkten (3, 4) zugeordnet ist,
- eine Wahleinrichtung, um auf jedem Synthesebild (3c, 4c) des ausgewählten Paares Zonen (3fi, 3gi; 4fi, 4gi) zu wählen, die in jeder der verschiedenen virtuellen spezifischen Richtungen (3di, 4di) einer jeden virtuellen Rasterfläche (zi) liegen;
- eine Vergleichseinrichtung (3hi, 4hi) für die Zonen (3fi, 3gi; 4fi, 4gi), wobei gegensätzliche Unterschiede des einen Synthesenbildes (3c) gegenüber dem anderen Synthesebild (4c) ermittelt werden.

16. System nach Anspruch 15, **dadurch gekennzeichnet, dass** bei Auftreten von gegensätzlichen Unterschieden bei dem Vergleich darauf geschlossen wird, dass ein Gegenstand (1) vorhanden ist.

17. System nach Anspruch 16, **dadurch gekennzeichnet, dass** zur Bestimmung, ob sich ein Gegenstand (1) vor und/oder hinter der Oberfläche (2) befindet, in jeder virtuellen spezifischen Richtung (3di, 4di) die Vergleichszonen (3fi, 3gi; 4fi, 4gi) auf der einen Seite und/oder der anderen Seite der Mittelpunkte (ci) der virtuellen Rasterflächen (zi) von der Einrichtung zur Wahl der Zonen (3fi, 3gi; 4fi, 4gi) für jeden Blickpunkt gewählt werden.

18. System nach einem der Ansprüche 16 oder 17, **dadurch gekennzeichnet, dass** zur Bestimmung, ob sich der Gegenstand (1) mehr oder weniger weit von der Oberfläche (2) entfernt befindet, in jeder der virtuellen spezifischen Richtungen (3di, 4di) diejenigen Vergleichszonen (3fi, 3gi; 4fi, 4gi) von der Einrichtung zur Wahl der Zonen (3fi, 3gi; 4fi, 4gi) ausgewählt werden, die mehr oder weniger weit von den besagten Mittelpunkten (ci) der virtuellen Rasterflächen (zi) entfernt liegen.

19. System nach einem der Ansprüche 16 bis 18, **dadurch gekennzeichnet, dass** zur Unterscheidung zwischen den Synthesebildem (3c, 4c) die Unterscheidungseinrichtung die Position des Gegenstandes längs der Oberfläche in Abhängigkeit von derjenigen Position auf der Oberfläche der Rasterfläche (zi), bestimmt, bei denen gegensätzliche Unterschiede gefunden wurden.

20. System nach einem der Ansprüche 15 bis 19, **dadurch gekennzeichnet, dass** zur Erzeugung jedes der zu einem betreffenden Blickpunkt gehörigen Synthesebilder (3c, 4c) folgende Merkmale vorgesehen sind:
- Messfühler (31, 41) an jedem Blickpunkt, welche Einrichtungen zum Empfangen radioaktiver Strahlungen und/oder elektromagnetischer Strahlungen (insbesondere Lichtstrahlungen) und/oder mechanischer Schwingungen des Gegenstandes (1) umfassen, um ein Signal zu erzeugen,
- eine Einrichtung (78) zum Digitalisieren des Signals und zur Gewinnung digitaler Daten,
- eine Einrichtung (73) zur Berechnung der Synthesebilder (3c, 4c) anhand der so erhaltenen Daten.

21. System nach Anspruch 20, **dadurch gekennzeichnet, dass** als Messfühler zum Empfangen der elektromagnetischen Strahlungen, insbesondere von Licht, und/oder der mechanischen Schwingungen, insbesondere von Ultraschall, optische Kameras (31, 41) und/oder Sonare vorgesehen sind, die an jedem Blickpunkt angeordnet sind.

22. System nach einem der Ansprüche 20 oder 21, wobei die Synthesebilder (3c, 4c) Zonen unterschiedlicher Farben aufweisen; **dadurch gekennzeichnet ist, dass** zur Ermittlung der gegensätzlichen Unterschiede auf jedem Synthesebild (3c, 4c) des ausgewählten Paares die Unterscheidungseinrichtung eine Einrichtung zur Ermittlung von Farbkontrastumkehrungen zwischen den Zonen (3fi, 3gi; 4fi, 4gi) aufweist, die in jeder der virtuellen spezifischen Richtungen (3di, 4di) jeder Rasterfläche (zi) liegen.

23. System nach einem der Ansprüche 15 bis 22, insbesondere zum Detektieren eines Gegenstandes (1) vor einem Hintergrund (200), **dadurch gekennzeichnet, dass** der Hintergrund (200) aus der Oberfläche (2) besteht.

24. System nach Anspruch 23, **dadurch gekennzeichnet, dass**
- die geometrische Transformation ferner eine von einem bestimmten Blickpunkt (3, 4) ausgehende, insbesondere rechtwinklige Projektion (6) auf eine Bezugsoberfläche (3e, 4e) enthält, welche zu einem bestimmten Blickpunkt (3, 4) gehört, wobei es sich um die Projektion der erwähnten perspektivischen Projektion (3a, 4a) des Gegenstandes (1) auf den Hintergrund (100) in Abhängigkeit von dem bestimmten Blickpunkt (3, 4) handelt,
- das zu dem bestimmten Blickpunkt (3, 4) gehörige Synthesebild (3c, 4c) zusammengesetzt ist aus:
• dem Bild (30, 40), das durch Anwendung der geometrischen Transformation auf den Gegenstand (1) und ferner durch Überlagerung auf die Bezugsoberfläche (3e, 4e) erzeugt wird,
• dem Bild, das durch Anwendung der geometrischen Transformation auf eine virtuelle Darstellung (3b, 4b) erzeugt wird, die aus Teilen des Hintergrundes (3bi, 3b2; 4b1, 4b2) besteht, welche durch die perspektivische Projektion (3a, 4a) des Gegenstandes (1) nicht verdeckt sind.

25. System nach Anspruch 24, **dadurch gekennzeichnet, dass** zur Erzeugung des Synthesebildes (3c, 4c) auf einer Bezugsoberfläche (3e, 4e)
- die Recheneinrichtung (73) anhand der digitalen Daten diejenigen Daten berechnet, die sich auf das Synthesebild (3c, 4c) auf der Bezugsoberfläche (3e, 4e) beziehen.

26. Anwendung des Systems nach einem der Ansprüche 23 bis 25 auf die Überwachung von Körpern (100) in einem Schwimmbecken (61), wobei der Boden (200) und/oder die Seitenwände (62) des Schwimmbeckens (61) den Hintergrund (200) bilden, **dadurch gekennzeichnet, dass** für den Fall, dass nach Unterscheidung der Synthesebilder (3c, 4c) darauf zu schließen ist, dass sich ein Körper (100) im Schwimmbecken (61) befindet, das System ferner folgende Merkmale aufweist:
- Eine Einrichtung zum Wiederholen des Unterscheidungsschrittes, um einen Körper (100), der einer verdächtigen Bahn folgt, insbesondere einen unbeweglichen Körpers (100) oder einen passiv sinkenden Körper (100), von einem Körper (100) zu unterscheiden, der einer normalen Bahn folgt,
- eine Sendeeinrichtung (77), um ein Alarmsignal auszusenden, wenn der Körper (100) während eines ungewöhnlich langen Zeitraumes einer verdächtigen Bahn folgt.

27. Anwendung nach Anspruch 26 auf den Fall, dass sich ein Körper (100) in der Nähe des Bodens (200) befindet.

28. Anwendung nach einem der Ansprüche 26 oder 27, **dadurch gekennzeichnet ist, dass** bei dem System:
- mindestens zwei Blickpunkte (3, 4) an geeignete Stellen der Seitenwände (62) des Schwimmbeckens (61) gelegt werden, um mindestens einen Teil des Wasservolumens des Schwimmbeckens (61) abzutasten, und
- die Bezugsoberfläche (3e, 4e) genau parallel zur Wasseroberfläche (63) des Schwimmbeckens (61) verläuft.

## Claims

1. A process for detecting an object (1) in relation to a surface (2), notably a virtual surface, said surface (2) not necessarily being flat;
said process includes the stage:
- for realising a computer-generated image (3c, 4c) associated to the viewpoint being considered for each viewpoint by means of a geometric conversion at least including a projection in perspective (3a, 4a) of said object (1) on said surface (2) from at least two distinct viewpoints (3, 4),
- for distinguishing between the computer-generated images (3c, 4c) for detecting a presence and determining the position of said object (1) in relation to said surface (2);
said process includes the following stages in order to distinguish between the different computer-generated images (3c, 4c):
- the stage for breaking said surface (2) down into a mosaic of fields (Zi) each including a centre (Ci),
- the stage for associating a specific direction (3Di, 4Di) to each centre (Ci) and each viewpoint (3, 4);
in this way each computer-generated image (3c, 4c) is broken down in virtual fields (zi) each consisting of as many specific virtual directions (3di, 4di) as there are viewpoints.
The said process also includes the following in order to distinguish between the computer-generated images (3c, 4c):
- the stage of selecting at least a couple of computer-generated images (3c, 4c) associated to at least a couple of viewpoints (3, 4),
- the stage of choosing zones (3fi, 3gi, 4fi, 4gi) situated according to each of the specific virtual directions (3di, 4di) of each virtual field (zi) on each computer-generated image (3c, 4c) of the couple selected;
the stage of comparing (3hi, 4hi) said zones (3fi, 3gi, 4fi, 4gi) in searching for opposing differences from one computer-generated image (3c) to another (4c).

2. Process according to claim 1 if opposing difference appear during the study and one concludes that there is an object (1).

3. Process according to claim 2 if, in order to determine whether an object (1) is in front of and/or behind said surface (2), one chooses zones of comparison (3fi, 3gi, 4fi, 4gi) on one side and/or the other of said centres (ci) of said virtual fields (zi) in relation to each of the viewpoints for each of the specific virtual directions (3di, 4di).

4. Process according to either of claims 2 or 3 if, in order to determine whether said object (1) extends further or less far in relation to said surface (2), one chooses zones of comparison (3fi, 3gi, 4fi, 4gi) more or less distant from said centres (ci) of said virtual fields (zi).

5. Process according to any of the claims 2 to 4, said process also including the stage of deducing the position of said object along the surface in relation to the position on the surface of the fields (zi) for which opposing differences were found.

6. Process according to any of the claims 1 to 5 if, in order to realise each of said computer-generated images (3c, 4c) associated to a viewpoint being considered,
- radioactive emissions and/or electromagnetic rays (notably light) and/or mechanical vibrations emitted by said object (1), are captured (31, 41), from each viewpoint in such a way as to produce a signal,
- said signal is digitised (78) in order to obtain digitised data,
- said computer-generated images (3c, 4c) are calculated (73) on the basis of the data obtained in this way.

7. Process according to claim 6 if, in order to capture the electromagnetic rays, notably light, and/or mechanical vibrations, notably ultrasounds,
- an optical camera (31, 41) and/or a sonar is implemented at each viewpoint.

8. Process according to either claim 6 or 7 if said computer-generated images (3c, 4c) show zones (3fi, 3gi, 4fi, 4gi) in different colours; said process being such that if, in order to search for opposing differences on each computer-generated image (3c, 4c) of the couple selected, inversions of colour contrasts between zones (3fi, 3gi, 4fi, 4gi) situated along each of the specific virtual directions (3di, 4di) of each field (zi) are sought.

9. Process according to any of the claims from 1 to 8 more particularly intended to detect an object (1) in front of a bottom (200), said bottom (200) consisting of said surface (2).

10. Process according to claim 9 if
- said geometric conversion also includes a projection, notably by orthogonal projection (6), on a surface of reference (3e, 4e) associated to a viewpoint (3, 4) being considered, said projection in perspective(3a, 4a) of said object (1) on said bottom (200) on the basis of said viewpoint (3, 4) being considered,
- said computer-generated image (3c, 4c) associated to viewpoint (3, 4) being considered consists:
• of the image (3o, 4o) realised by means of the application of said geometric conversion on said object (1), and in addition to the superposition, on said surface of reference (3e, 4e)
• the image realised through the application of said geometric conversion on a virtual representation (3b, 4b) consisting of sections of the bottom (3b1, 3b2; 4b1, 4b2) not masked by said projection in perspective (3a, 4a) of the object (1).

11. Process according to claim 10 if, in order to realise said computer-related image (3c, 4c) on a surface of reference (3e, 4e):
- the data relating to the computer-generated image (3c, 4c) on said surface of reference (3e, 4e) are calculated (73) on the basis of said digitised data.

12. Application of the process according to any of claims 9 to 11 for the surveillance of the bodies (100) in a swimming pool (61); said bottom (200) being the bottom (200) and/or the sides (62) of the swimming pool (61); said application being such that in the event that, after distinguishing the computer-generated images (3c, 4c), it is concluded that there is a body (100) in the swimming pool (61)
- the procedure of discrimination in order to distinguish a body (100) having a suspicious trajectory, notably an immobile body (100) or a body (100) sinking passively, from a body (100) with a normal trajectory is reiterated,
- an alarm signal is emitted (77) if the body (100) has a suspicious trajectory for an abnormally long period of time.

13. Application according to claim 12 in the event that a body (100) is situated close to the bottom (200).

14. Application according to either of claims 12 or 13 if
- at least two viewpoints (3, 4) are situated on the sides (62) of the swimming pool (61) in appropriate positions in order to sweep at least a fraction of the volume of water in the swimming pool (61),
- said surface of reference (3e, 4e) is roughly parallel to the surface (63) of the water in the swimming pool (61).

15. A system for detecting an object (1) in relation to a surface (2), notably a virtual surface, said surface (2) not necessarily being flat;
said system includes:
- means of detection (31, 41) and the first means of calculation of a central processing unit (73) in order to realise a computer-generated image (3c, 4c) associated to the viewpoint being considered by means of a geometric conversion including at least one projection in perspective (3a, 4a) of said object (1) on said surface (2) from at least two distinct viewpoints (3, 4) and for each of these,
- means of discrimination (73) in order to distinguish between the computer-generated images (3c, 4c) in order to detect presence and to determine the position of said object (1) in relation to said surface (2);
said means of discrimination of said system include:
- means of partition for breaking said surface (2) down into a mosaic of fields (Zi) each including a centre (Ci) and as many specific directions (3Di, 4Di) as there are viewpoints (3, 4);
so that each computer-generated image (3c, 4c) is broken down into virtual fields (zi) each including as many specific virtual directions (3di, 4di) as there are viewpoints;
said means of discrimination also include the following in order to distinguish between the computer-generated images (3c, 4c):
- the means of selection for selecting at least a couple of computer-generated images (3c, 4c) associated to at least a couple of viewpoints (3, 4),
- the means for choosing the zones (3fi, 3gi, 4fi, 4gi) situated according to each of the specific virtual directions (3di, 4di) of each virtual field (zi) on each computer-generated image (3c, 4c) of the couple selected,
- the means of comparison for comparing (3hi, 4hi) said zones (3fi, 3gi, 4fi, 4gi) in searching for opposing differences from one computer-generated image (3c) to another (4c).

16. System according to claim 15 if, it is possible to conclude that there is an object (1) because opposing differences appear as a result of the search.

17. System according to claim 16 if, in order to determine whether an object (1) is in front of and/or behind said surface (2), said means for choosing the zones (3fi, 3gi, 4fi, 4gi) on each of the specific virtual directions (3di, 4di) chooses zones of comparison (3fi, 3gi; 4fi, 4gi) on one side and/or on the other of said centres (ci) of said virtual fields (zi) in relation to each of the viewpoints.

18. System according to either claim 16 or 17 if, in order to determine whether said object (1) extends more or less far in relation to said surface (2), said means for choosing the zones (3fi, 3gi, 4fi, 4gi) on each of the specific virtual directions (3di, 4di) choose zones of comparison (3fi, 3gi, 4fi, 4gi) more or less distant from said centres (ci) from the virtual fields (zi).

19. System according to any of claims 16 to 18 if the means for discriminating in order to distinguish between computer-generated images (3c, 4c) determine the position of said object along the surface in relation to the position on the surface of the fields (zi) for which opposing differences were found.

20. System according to any claims 15 to 19 if, in order to realise each of said computer-generated images (3c, 4c) associated to a viewpoint being considered, said system includes
- sensors (31, 41), in each viewpoint, said sensors including means for capturing radioactive emissions and/or electromagnetic rays (notably light) and/or mechanical vibrations emitted from said object (1), in such a way as to produce a signal,
- means for digitisation (78) in order to digitise said signal and in order to obtain digital data,
- means for calculation (73) in order to calculate said computer-generated images (3c, 4c) on the basis of data obtained in this way.

21. System according to claim 20 if said sensors in order to capture electromagnetic rays, notably light, and/or mechanical vibrations, notably ultrasounds, are optical cameras (31, 41) and/or sonars situated at each viewpoint.

22. System according to either of claims 20 or 21 if said computer-generated images (3c, 4c) show zones (3fi, 3gi, 4fi, 4gi) of different colours; said system being such as to search out opposing differences on each computer-generated image (3c, 4c) of the couple selected, said means of discrimination including means to search out inversions of contrasts of colour between zones (3fi, 3gi, 4fi, 4gi) situated according to each of the specific virtual directions (3di, 4di) of each field (zi).

23. System according to any of claims 15 to 22 more particularly intended to detect an object (1) in front of a bottom (200), said bottom (200) consisting of said surface (2).

24. System according to claim 23 if
- said geometric conversion also includes a projection, notably by means of an orthogonal projection (6), on a surface of reference (3e, 4e) associated with a viewpoint (3, 4) being considered, said projection in perspective (3a, 4a) of said object (1) on said bottom (200) on the basis of said viewpoint (3, 4) being considered,
- said computer-generated image (3c, 4c) associated with the viewpoint (3, 4) being considered consists:
• of the image (3o, 4o) realised by means of the application of said geometric conversion of said object (1) and in addition to the superposition on said surface of reference (3e, 4e)
• of the image realised by means of the application of said geometric conversion to a virtual representation (3b, 4b) consisting of the sections of the bottom (3b1, 3b2, 4b1, 4b2) not masked by said projection in perspective (3a, 4a) of the object (1).

25. System according to claim 24 if, in order to realise said computer-generated image (3c, 4c) on a surface of reference (3e, 4e):
- said means of calculation (73) calculate on the basis of said digital data, the data relating to the computer-generated image (3c, 4c) on said surface of reference (3e, 4e).

26. Application of the system according to any claims 23 to 25 for the surveillance of bodies (100) in a swimming pool (61); said bottom (200) being the bottom (200) and/or the sides (62) of the swimming pool (61); said application being such that in the event that, after distinguishing the computer-generated images (3c, 4c), it is concluded that there is a body (100) in the swimming pool (61) said system also including
- means for reiteration in order to reiterate the procedure of discrimination and in order to distinguish between a body (100) with a suspicious trajectory, notably an immobile body (100) or a body (100) sinking passively, from a body (100) with a normal trajectory,
- means of emission (77) in order to emit an alarm signal if the body (100) has a suspicious trajectory during an abnormally long period of time.

27. Application according to claim 26 in the event that a body (100) is situated near the bottom (200).

28. Application according to either claim 26 or 27 of said system being such that
- at least two viewpoints (3, 4) are situated on the sides (62) of the swimming pool (61) in locations appropriate for sweeping at least a fraction of the volume of water in the swimming pool (61),
- said surface of reference (3e, 4e) is roughly parallel to the surface (63) of the water in the swimming pool (61).
